# FASCICULE DE BREVET EUROPEEN

(11) **EP 4 165 347 B1**
(45) Date de publication et mention de la délivrance du brevet: **25.12.2024**
(21) Numéro de dépôt: 21737108.7
(22) Date de dépôt: 09.06.2021
(51) Int. Cl.: F23R 3/00

(54) **PRODUCTION PAR FABRICATION ADDITIVE DE PIÈCES COMPLEXES DE CHAMBRE DE COMBUSTION DE TURBOMACHINE ET CHAMBRE DE COMBUSTION DE TURBOMACHINE**
ERSTELLUNG KOMPLEXER TEILE EINER TURBOMASCHINENVERBRENNUNGSKAMMER DURCH GENERATIVE FERTIGUNG UND TURBOMASCHINENVERBRENNUNGSKAMMER
PRODUCTION OF COMPLEX PARTS OF COMBUSTION CHAMBER OF TURBOMACHINE BY ADDITIVE MANUFACTURING AND COMBUSTION CHAMBER OF TURBOMACHINE

(30) Priorité: 15.06.2020 FR 2006204
(43) Date de publication de la demande: 19.04.2023
(73) Titulaire: Safran Helicopter Engines, 64510 Bordes (FR)
(72) Inventeur: AUTRET, Jean-Paul Didier, 77550 MOISSY-CRAMAYEL (FR); GRESY, Thomas Sebastien Alexandre, 77550 MOISSY-CRAMAYEL (FR); LAVIGNOTTE, Stéphane, 77550 MOISSY-CRAMAYEL (FR); SAVARY, Nicolas, Roland, Guy, 77550 MOISSY-CRAMAYEL (FR)
(74) Mandataire: Ernest Gutmann - Yves Plasseraud S.A.S.
(86) Numéro de dépôt international: PCT/FR2021/051030
(87) Numéro de publication internationale: WO 2021/255364

(56) Documents cités:
- EP-A1- 3 073 196
- EP-A1- 3 144 485
- WO-A1-2018/144064
- DE-A1- 102017 216 595
- FR-A1- 3 041 889
- FR-A1- 3 041 889
- FR-A1- 3 072 448
- FR-A1- 3 097 028
- FR-A1- 3 097 029
- US-A- 4 549 402
- US-A1- 2002 162 331
- US-A1- 2017 363 295
- US-A1- 2018 010 796

## Description

### Domaine technique

L'invention concerne, dans le domaine des turbomachines aéronautiques, la production par fabrication additive de pièces assez complexes.

La production par fabrication additive d'au moins une partie de chambre de combustion de turbomachine à gaz est ainsi concernée.

Cette production peut en particulier s'opérer par fabrication additive sur lit de poudre.

### Technique antérieure

La fabrication additive permet d'obtenir des pièces ayant des géométries relativement complexes en s'affranchissant des contraintes liées par exemple à l'utilisation d'un moule. Cependant, ces procédés de fabrication sont encore limités par le temps de fabrication requis qui est long, par les coûts de fabrication élevés ainsi que par certaines difficultés de mises en oeuvre.

FR3041889 et EP3002212 présentent des solutions de production de pièces par fabrication additive, en particulier sur lit de poudre. Les détails de ces techniques de production sont ici transposables.

FR3072448 présente également une méthode de production par fabrication additive d'au moins une partie de chambre de combustion de turbomachine à gaz.

Dans ce contexte général, le présent sujet concerne spécifiquement la production d'au moins une partie de chambre de combustion de turbomachine à gaz par un tel procédé.

Dans une telle chambre de combustion, pour protéger une paroi des effets de la chaleur, on sait que l'établissement d'un film d'air est efficace. Ce film peut être obtenu par une double paroi de courte longueur alimentée en air par des orifices (souvent appelés perçages) qui traversent l'une des parois. La double paroi dirige l'air le long de la surface à protéger de façon plutôt homogène.

Une solution existante pour réaliser de telles zones de chambre de combustion consiste à fabriquer de façon indépendante une pièce de tôle qui définira la paroi intérieure de doublure de la paroi extérieure du corps proprement dit de la chambre de combustion, puis d'assembler, par soudure ou brasure, cette pièce de tôle audit corps, en maintenant un espace assurant le film d'air.

Ceci impose de chaudronner les pièces à assembler de façon à les positionner correctement.

Après assemblage, une opération de calibration est nécessaire pour que l'écartement entre parois soit adapté, afin de chercher à assurer un écoulement homogène du film d'air.

Ces opérations impactent directement le coût et le cycle de production.

L'invention a pour but de résoudre certains au moins des inconvénients précités.

### Résumé de l'invention

Afin d'améliorer la situation, le présent document propose un procédé de production par fabrication additive d'au moins une partie de chambre de combustion de turbomachine aéronautique s'étendant autour d'un axe (repéré X1 ci-après) selon l'objet de la revendication

Ainsi, en extrémité amont la paroi radialement intérieure va rejoindre la paroi radialement extérieure.

Une telle extrémité amont de raccordement, qui peut autour du fond de la chambre de combustion, est importante.

En effet, on va pouvoir de la sorte produire la paroi radialement intérieure dans la même pièce que la paroi radialement extérieure alors que le sens de fabrication ne permet pas de fabriquer de paroi suspendue.

La fabrication de ces soutiens ou maintiens que forme la succession de pontets devient aisée.

« Radialement » a pour sens : radial par rapport à l'axe X1. La paroi radialement extérieure est, dans cette direction, plus éloignée de l'axe X1 que la paroi radialement intérieure.

Si, comme on le propose par ailleurs, on réalise ladite fabrication additive sur lit de poudre métallique, par un laser, les pontets ainsi disposés vont permettre de dissiper l'énergie du laser et obtenir une solidification du métal nécessaire à la construction de la paroi radialement intérieure.

Et cet effet de dissipation d'énergie, puis de bon écoulement d'air dans l'espace entre lesdites parois respectivement radialement extérieure et radialement intérieure pourra être encore meilleur si, comme aussi proposé, la paroi radialement extérieure et la paroi radialement intérieure sont parallèles l'une à l'autre sur une partie de la longueur de la paroi radialement intérieure s'étendant entre ses extrémités de raccordement respectivement à la paroi radialement extérieure et aux pontets.

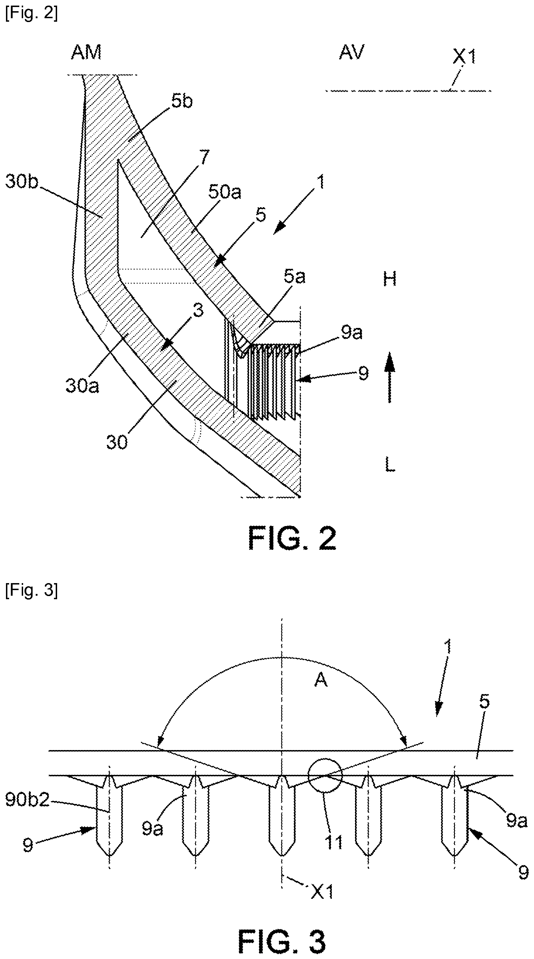

Ceci n'empêche pas qu'elles se raccordent l'une à l'autre côté amont de la chambre de combustion, les deux parois étant pour cela inclinées par rapport à l'axe X1, et allant donc en se rapprochant de cet axe X1 vers l'amont, avec donc une pente plus forte pour la paroi radialement extérieure, vers l'extrémité amont (sur la figure 2 ci-après la face 30b peut être presque perpendiculaire à l'axe X1).

Cette pente plus forte de la paroi radialement extérieure (qui peut donc être à l'endroit de la face 30b ci-après), peut appartenir à un fond de la chambre de combustion situé, le long de l'axe X1, en extrémité amont de la chambre de combustion, à l'opposé axial de l'ouverture, centrée sur l'axe X1, que la chambre de combustion présente, autour de l'axe X1, en extrémité aval, pour l'évacuation des gaz chauds issus de la combustion dans la chambre de combustion.

Pour l'entrée, dans la chambre de combustion, de l'air comburant et/ou du combustible (fuel a priori), le fond précité pourra être annulaire, avec donc un passage central centré sur l'axe X1.

Perpendiculairement à l'axe X1, la section de ce passage central sera inférieure à la section de l'ouverture d'évacuation des gaz chauds.

La fabrication additive permet qu'en poursuivant les dépôts de couches dudit matériau après la fabrication d'une zone inférieure de chambre de combustion comme expliqué ci-avant, on continue à créer, annulairement autour dudit axe (X1) :
- la paroi radialement extérieure,
- la paroi radialement intérieure, et
- les pontets disposés à côté les uns des autres vers l'extrémité de paroi radialement intérieure opposée à celle où la paroi radialement intérieure rejoint la paroi radialement extérieure, ceci :
   -- en réalisant, autour de l'axe (X1), lesdites parois respectivement radialement extérieure et radialement intérieure polygonales (d'autres parties de ces parois), et
   -- en inclinant les pontets (d'autres dits pontets) de façon qu'ils s'étendent entre lesdites parois respectivement radialement extérieure et radialement intérieure
transversalement au côté du polygone où ces pontets sont disposés.

Ainsi inclinés certains au moins pour des pontets considérés s'étendront, entre lesdites parois respectivement radialement extérieure et radialement intérieure, de façon non perpendiculaire, mais plutôt de façon biais par rapport au côté concerné. Des angles donc autres que 90°, tels qu'entre 10° et 80°, sont mis en oeuvre.

Pour alimenter en air l'espace créé entre les parois radialement extérieure et radialement intérieure, on réservera utilement, dans la paroi radialement extérieure, des ouvertures qui pourront déboucher dans cet espace.

L'orientation de certains au moins de ces orifices sera globalement parallèle audit axe (X1), pour un balayage d'air efficace.

Outre le procédé présenté ci-avant, est aussi concernée par l'invention une chambre de combustion de turbomachine à gaz selon l'objet de la revendication 5.

Ainsi, par rapport à l'axe (X1), la paroi radialement extérieure présentera favorablement une pente plus forte vers son extrémité amont de raccordement que plus en aval, vers ladite extrémité libre.

On aura bien sûr compris que « l'extrémité amont de raccordement » ci-dessus est l'extrémité (amont) de la paroi radialement extérieure où celle-ci se raccorde - rejoint - l'extrémité amont de raccordement à elle de la paroi radialement intérieure.

Plus en aval de leurs « extrémités amont de raccordement » respectives, les parois radialement intérieure et radialement extérieure pourront utilement devenir sensiblement parallèles, permettant ainsi d'éviter, en extrémité libre de la paroi radialement intérieure, un dit espace intermédiaire et donc un film d'air non appropriés, car occupant un espace trop exigu.

Parmi les caractéristiques de cette chambre de combustion, on notera que des pontets individualisés, s'étendant à côté les uns des autres relient la paroi radialement intérieure et la paroi radialement extérieure vers une extrémité libre de la paroi radialement intérieure, ceci :
- de façon monobloc et
- de telle sorte que les pontets et, au moins localement, la paroi radialement intérieure et la paroi radialement extérieure soient obtenues par empilement de couches successives ; technique souvent dénommée « à structure de couches additives ».

Comme précédemment, ceci doit d'améliorer la situation face à certains au moins des inconvénients précités.

L'expression « à structure de couches additives » a pour sens monobloc, mais en outre :
« produits par fabrication additive », avec donc une structure physico-chimique spécifique à cette fabrication et que l'on peut reconnaître par une analyse physico-chimique de cette structure et donc différencier notamment d'une fabrication par coulée ou injection.

Afin de favoriser une continuité périphérique (autour de l'axe X1) de maintien de la paroi du film et un passage homogène d'air, il est par ailleurs proposé que, sur cette chambre de combustion, à une extrémité où ils se raccordent à la paroi radialement intérieure, les pontets s'évasent :
- jusqu'à venir en contact deux à deux et/ou
- jusqu'à un angle inférieur à 150° ou compris entre 120° et 160°.

Concernant les ouvertures pour l'air dans la paroi radialement extérieure, qui déboucheront donc entre lesdites parois radialement extérieure et radialement intérieure, il est même proposé :
- qu'elles soient formées sur plusieurs faces de la paroi radialement extérieure, suivant plusieurs lignes parallèles, et/ou,
- qu'elles aient individuellement une forme de pentagone convexe.

Est enfin aussi concernée par l'invention une turbomachine aéronautique comprenant la chambre de combustion pourvue de tout ou partie des caractéristiques ci-avant. Concernant la fabrication additive, cette technique regroupe donc les procédés de fabrication de pièces en volume par ajout ou agglomération de matière, par empilement de couches successives. A partir d'une conception assistée par ordinateur, un logiciel spécifique organise un découpage en tranches des différentes couches nécessaires à la réalisation de la pièce. L'utilisation de plusieurs matériaux peut permettre d'obtenir une pièce dont la dilatation thermique est nulle et/ou est contrôlée, ou d'autres propriétés physiques. On peut prévoir une étape de pressage isostatique à chaud, pressage isostatique à froid ou pressage isostatique de densification sous vide, pour favoriser l'obtention de pièces qui ne présentent notamment pas d'anisotropie ou de porosité non désirée. La pièce peut comprendre un alliage métallique et/ou un matériau céramique.

### Brève description des dessins

[Fig. 1] la figure 1 schématise un mode possible de réalisation d'une solution conforme à l'invention, en illustrant une partie inférieure amont de chambre de combustion de turbomachine aéronautique, en perspective et coupe axiale (axe X1).
[Fig. 2] la figure 2 schématise la coupe de la figure 1 vue suivant la flèche Ile, suivant.
[Fig. 3] la figure 3 schématise la coupe de la figure 1 vue suivant la flèche III.
[Fig. 4] la figure 4 représente la vue de la figure 1 vue suivant la flèche IV.
[Fig. 5] la figure 5 est un schéma grossier en coupe axiale de la chambre de combustion précitée.

### Description des modes de réalisation

Dans la description qui suit, des chiffres de référence identiques désignent des pièces identiques ou ayant des fonctions similaires.

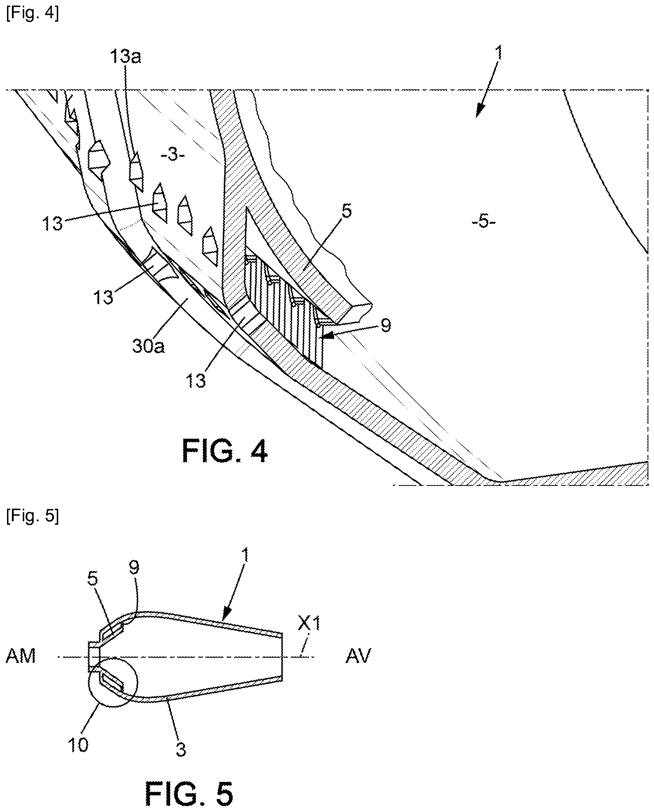

Un objet de l'invention est donc, repérée 1 sur les figures (figure 5 notamment), une chambre de combustion de turbomachine aéronautique (à gaz).

Comme connu, une telle chambre de combustion 1 est interposée entre, en amont par rapport au sens général de circulation des gaz dans la turbomachine, un compresseur et, en aval, une turbine.

En amont, un système d'injection d'air et de carburant alimente la chambre de combustion en air et en carburant. Une fraction de l'air amont provenant du compresseur est guidée à travers le système d'injection, pour la formation d'un mélange carburé injecté selon un axe X1. Le mélange passe dans une zone primaire interne de la chambre de combustion où ont lieu les réactions de combustion, puis les gaz produits sont dilués et refroidis dans une zone secondaire, plus aval, puis sont distribués vers la turbine qu'ils entraînent.

X1 est aussi l'axe autour duquel s'étend la chambre de combustion 1 d'amont vers l'aval.

La chambre de combustion 1 présente en conséquence, suivant l'axe X1, en extrémité amont, un fond traversé par un passage central et, en extrémité aval, une ouverture d'évacuation des gaz chauds ; voir figure 5.

Comme on peut aussi le noter figure 5, perpendiculairement à l'axe X1, la section du passage central est de préférence inférieure à la section de l'ouverture d'évacuation des gaz chauds.

La turbomachine à gaz équipée de la chambre de combustion 1 peut être un turboréacteur à double flux et à double corps, pourvue donc, d'amont (AM) vers l'aval (AV), d'une soufflante, d'un compresseur basse-pression, d'un compresseur haute-pression, d'une chambre annulaire de combustion, d'une turbine haute-pression et d'une turbine basse-pression.

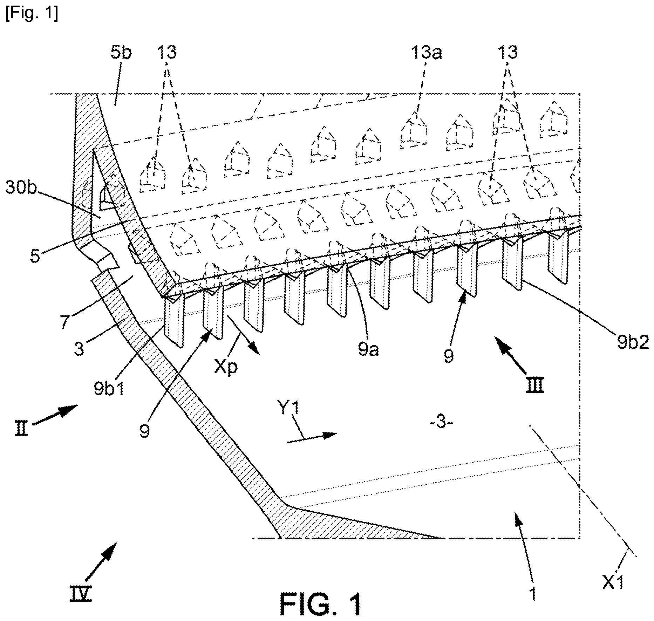

Comme l'illustre notamment la figure 1, la chambre de combustion 1 comprend, autour de l'axe X1, une paroi radialement extérieure 3 doublée localement par une paroi radialement intérieure 5.

Ainsi, un espace intermédiaire 7 existe entre les parois radialement extérieure 3 et radialement intérieure 5. Un film d'air peut être créé entre les parois.

Pour fabriquer la paroi radialement intérieure 5 dans la même pièce que la paroi radialement extérieure 3, en contournant la difficulté de réalisation d'une paroi suspendue, des pontets 9 individualisés, s'étendant à côté les uns des autres, relient de façon monobloc la paroi radialement intérieure 5 et la paroi radialement extérieure 3, vers une extrémité libre 5a de la paroi radialement intérieure 5.

Autrement dit, les pontets 9 et, au moins localement, comme dans la zone inférieure 10 de la chambre de combustion 1 (figure 5), la paroi radialement intérieure 5 et la paroi radialement extérieure 3 sont d'une seule pièce et à structure commune de couches additives.

Afin de favoriser une continuité périphérique (autour de l'axe X1) de maintien (soutien pour ladite zone inférieure 10) de la paroi radialement intérieure 5 et un passage homogène d'air dans l'espace intermédiaire 7, la présence de pontets 9 s'évasant à une extrémité (ou sommet) 9a où ils se raccordent à la paroi radialement intérieure 5 pourra être utile.

En particulier, les pontets 9 peuvent alors s'évaser :
- jusqu'à venir en contact deux à deux (zone 11 figure 3), et/ou
- jusqu'à un angle A inférieur à 150° ou compris entre 120° et 160°.

Il s'agit d'un compromis entre la capacité de la fabrication additive et de l'effet mécanique à atteindre.

Pour encore favoriser un passage d'air homogène (assez stable), il est mis en oeuvre:
- qu'autour de l'axe X1, lesdites parois radialement extérieure 3 et radialement intérieure 5 soient à faces polygonales (voir figure 4), et
- que, perpendiculairement à la direction suivant laquelle les pontets 9 relient lesdites parois intérieure 5 et extérieure 3, et perpendiculairement à la direction (Y1) suivant laquelle ces parois 3 et 5 s'étendent autour dudit axe X1, les pontets 9 soient allongés (direction Xp figure 1) et présentent des extrémités chacune en double biseau 9b1, 9b2.

Les extrémités 9b1, 9b2 affinées sont aérodynamiques et des pontets 9 plus longs (direction Xp) que larges stabilisent la circulation de l'air d'amont vers l'aval.

Réserver, dans la paroi radialement extérieure 3, des ouvertures 13 débouchant dans l'espace intermédiaire 7 permettra d'assurer une circulation propice à la création du film d'air souhaité le long de la face interne de la paroi radialement extérieure 3.

Concernant ces ouvertures 13, il est même proposé :
- qu'elles soient formées sur plusieurs faces, telles que 30a,30b, de la paroi radialement extérieure 3, de préférence suivant plusieurs lignes parallèles entre elles, et/ou,
- qu'elles aient individuellement une forme de pentagone convexe (voir figure 1).

La partie 13a convexe, à double pente, de chaque pentagone convexe sera à ce sujet de préférence située plus près de l'axe X1 que les autres côtés du pentagone.

Ainsi, on associera utilement une réalisation des parois 3,5 à faces polygonales, adaptée à la fabrication additive, et une distribution des ouvertures 13 répartie autour de l'axe X1, avec une tenue mécanique optimisée (forme de pentagone convexe).

Concernant la production d'au moins une partie de chambre de combustion, telle que la pièce 1, on aura noté l'intérêt marqué pour que, du fait de la fabrication additive, celle-ci s'opère du bas vers le haut (respectivement L et H, et flèche, figure 2).

Ainsi, tandis que, par dépôts d'une succession de couches de matériau, on créera une partie inférieure 30 (zone inférieure 10) de ladite paroi radialement extérieure 3, on poursuivra le dépôt de telles couches de matériau pour élever, sur ladite partie inférieure, des pontets 9 alors dressés à côté les uns des autres jusqu'à des sommets 9a de ces pontets.

Parvenu là, on pourra y poursuivre les dépôts de couches de matériau, pour créer (initier la création de) la paroi radialement intérieure 5, tout en poursuivant la création de la paroi radialement extérieure 3.

Au fur et à mesure, on poursuivra alors encore lesdits dépôts de couches de matériau, au moins jusqu'à faire se rejoindre ladite partie inférieure 30 de la paroi radialement extérieure 3 et une extrémité 5b de la paroi radialement intérieure 5 opposée (parallèlement à l'axe X1) à celle 5a où sont situés les pontets 9.

Ainsi, dans la zone inférieure 10, la paroi radialement intérieure 5 est inclinée par rapport à l'axe X1 et s'élève vers son extrémité 5b de raccordement à la paroi radialement extérieure 3.

En regard, la paroi radialement extérieure 3 y est d'ailleurs aussi inclinée par rapport à l'axe X1.

De préférence, pour un compromis entre fabrication, tenue mécanique, effet aérodynamique, il est à ce sujet conseillé que la paroi radialement extérieure 3 et la paroi radialement intérieure 5 sont parallèles l'une à l'autre, sur l'essentiel de la longueur L de la paroi radialement intérieure 5 s'étendant entre lesdites extrémités 5a et 5b.

Sur le reste du pourtour (fermé, donc du périmètre) des parois radialement extérieure 3 et radialement intérieure 5, si la technique précitée de fabrication est aussi utilisée, il est conseillé de procéder de la même manière : incliner les deux parois 3 et 5 par rapport à l'axe X1, mais avec alors des sens de progressions inversés en partie supérieure desdites parois 3,5, et donc de la chambre de combustion 1, à savoir en élevant la paroi radialement intérieure 5 depuis son extrémité 5b de raccordement à la paroi radialement extérieure 3 vers son extrémité libre 5a où on élèvera les pontets 9 jusqu'à les raccorder à la paroi radialement extérieure 3 que les dépôts de couches en cours auront entretemps continué à créer.

A ce sujet, on aura aussi noté l'intérêt du compromis (entre fabrication, tenue mécanique et impact aérodynamique) à ce que, tout en poursuivant les dépôts de couches dudit matériau, on continue à créer, annulairement autour de l'axe X1, la paroi radialement extérieure 3, la paroi radialement intérieure 5 et les des pontets 9 alors disposés à côté les uns des autres, vers l'extrémité libre 5a de la paroi radialement intérieure 5, ceci :
- en réalisant, autour de l'axe X1, desdites paroi radialement extérieure 3 et radialement intérieure 5 polygonales, et
- en inclinant les pontets 9 de façon que ces pontets s'étendent entre lesdites paroi radialement extérieure 3 et radialement intérieure 5, transversalement au côté (ou face) du polygone où ils sont disposés ; voir par exemple figure 2 : pontets 9 pouvant être dressés verticalement entre la face 30a de la paroi radialement extérieure 3 et celle, sensiblement parallèle, 50a de la paroi radialement intérieure 5, ces deux faces étant inclinées par rapport à l'axe X1, en se rapprochant de cet axe X1 vers l'amont.

Transversalement a ici pour sens non perpendiculaire, mais plutôt incliné par rapport au côté concerné.

## Revendications

1. Procédé de production par fabrication additive d'au moins une partie de chambre de combustion de turbomachine aéronautique s'étendant autour d'un axe (X1) et comprenant une paroi radialement extérieure (3) doublée localement par une paroi radialement intérieure (5) de façon à former entre elle un espace (7) intermédiaire pouvant créer un film d'air,
**caractérisé en ce que**, du bas vers le haut et par fabrication additive :
- alors que, par dépôts d'une succession de couches de matériau, on crée une partie inférieure (30) de ladite paroi radialement extérieure (3), on poursuit le dépôt de couches dudit matériau pour élever, sur ladite partie inférieure, des pontets (9) dressés à côté les uns des autres jusqu'à des sommets (9a) desdits pontets où
- on poursuit les dépôts de couches dudit matériau pour créer, annulairement autour de l'axe (X1), la paroi radialement intérieure (5), tout en poursuivant ladite création de la paroi radialement extérieure (3), et
- on poursuit encore lesdits dépôts de couches de matériau, au moins jusqu'à faire se rejoindre ladite partie inférieure (30) de la paroi radialement extérieure (3) et une extrémité (5b) de paroi radialement intérieure opposée à celle où sont situés les pontets (9),
et ceci :
- en réalisant, de façon polygonale, autour de l'axe (X1), lesdites paroi radialement extérieure (3) et paroi radialement intérieure (5), et
- en réalisant les pontets afin qu'entre lesdites paroi radialement extérieure et paroi radialement intérieure ils s'étendent de façon inclinée, non perpendiculaire au côté du polygone où ils sont disposés,
de sorte que les pontets (9) soient disposés à côté les uns des autres vers l'extrémité (5a) de la paroi radialement intérieure opposée à celle où la paroi radialement intérieure (5) rejoint la paroi radialement extérieure (3).

2. Procédé selon la revendication 1, dans lequel on réalise ladite fabrication additive sur lit de poudre métallique.

3. Procédé selon la revendication 1 ou 2, dans lequel la paroi radialement extérieure (3) et la paroi radialement intérieure (5) sont parallèles l'une à l'autre sur une partie de la longueur de la paroi radialement intérieure s'étendant entre lesdites extrémités.

4. Procédé selon l'une des revendications précédentes dans lequel, dans la paroi radialement extérieure (3), on réserve des ouvertures (13) qui débouchent entre la paroi radialement extérieure (3) et la paroi radialement intérieure (5).

5. Chambre de combustion de turbomachine à gaz présentant un axe (X1) le long duquel elle présente un côté amont et côté aval, la chambre de combustion comprenant :
- autour dudit axe (X1), une paroi radialement extérieure (3) doublée localement par une paroi radialement intérieure (5), de façon à former entre elles un espace (7) intermédiaire pouvant créer un film d'air,
- des pontets (9) individualisés, qui s'étendent à côté les uns des autres et qui relient de façon monobloc la paroi radialement intérieure et la paroi radialement extérieure,
**caractérisé en ce que** :
- la paroi radialement intérieure (5) est ainsi reliée vers une extrémité libre (5a),
- les deux parois, respectivement radialement extérieure (3) et radialement intérieure (5), se raccordent l'une à l'autre, côté amont, vers une extrémité opposée à ladite extrémité libre (5a), et sont pour cela non perpendiculaires, mais plutôt inclinées par rapport à l'axe (X1) en allant en se rapprochant de l'axe (X1) vers l'amont, avec une pente plus forte pour la paroi radialement extérieure, vers ladite extrémité amont de raccordement,
- autour de l'axe (X1), lesdites paroi radialement extérieure (3) et paroi radialement intérieure (5) sont à faces polygonales, et entre lesdites paroi radialement extérieure et paroi radialement intérieure, les pontets s'étendent de façon inclinée, non perpendiculaire au côté du polygone où ils sont disposés,
- perpendiculairement à la direction suivant laquelle ils relient la paroi radialement intérieure et la paroi radialement extérieure et à la direction suivant laquelle lesdites parois radialement intérieure (5) et radialement extérieure (3) s'étendent autour dudit axe (X1), les pontets (9) sont allongés et présentent des extrémités chacune en double biseau.

6. Chambre de combustion selon la revendication 5 dans laquelle, à une extrémité où ils se raccordent à la paroi radialement intérieure (5) les pontets (9) s'évasent jusqu'à venir en contact deux à deux et/ou jusqu'à un angle inférieur à 150° ou compris entre 120° et 160°..

7. Chambre de combustion (1) selon la revendication 5 ou 6 présentant, dans la paroi radialement extérieure (3), des ouvertures (13) qui débouchent entre la paroi radialement extérieure et la paroi radialement intérieure.

8. Chambre de combustion selon l'une des revendications 5 à 7, dans laquelle les ouvertures sont formées, sur plusieurs faces de la paroi radialement extérieure (3), suivant plusieurs lignes parallèles, et/ou en ayant individuellement une forme de pentagone convexe.

9. Turbomachine aéronautique comprenant la chambre de combustion (1) selon l'une quelconque des revendications 5 à 8.

## Patentansprüche

1. Additives Fertigungsverfahren zur Herstellung zumindest eines Teils der Brennkammer eines Luftfahrtturbotriebwerks, die sich um eine Achse (X1) erstreckt und eine radial äußere Wand (3) umfasst, die bereichsweise mit einer radial inneren Wand (5) verkleidet ist, so dass zwischen diesen ein Zwischenraum (7) besteht, in dem sich eine Luftschicht bilden kann,
**dadurch gekennzeichnet, dass** von unten nach oben mittels additiver Fertigung
- durch Aufbringen von aufeinanderfolgenden Materialschichten ein unterer Abschnitt (30) der radial äußeren Wand (3) erzeugt wird und das Aufbringen von Materialschichten fortgesetzt wird, um an dem unteren Abschnitt Brückenelemente (9) zu erstellen, die sich nebeneinanderliegend bis zu den Scheitelpunkten (9a) der Brückenelemente erheben, wobei
- das Aufbringen von Materialschichten fortgesetzt wird, um die radial innere Wand (5) ringförmig um die Achse (X1) zu erzeugen, während dabei die Erzeugung der radial äußeren Wand (3) fortgesetzt wird, und
- das Aufbringen von Materialschichten weiter zumindest solange fortgesetzt wird, bis der untere Abschnitt (30) der radial äußeren Wand (3) und ein Endabschnitt (5b) der radial inneren Wand, der demjenigen gegenüberliegt, an dem sich die Brückenelemente (9) befinden, aufeinandertreffen, und zwar:
- durch polygonales Ausbilden der radial äußeren Wand (3) und der radial inneren Wand (5) um die Achse (X1) herum, und
- durch Ausbilden der Brückenelemente derart, dass sie zwischen der radial äußeren Wand und der radial inneren schräg und nicht orthogonal zur derjenigen Seite des Polygons verlaufen, wo sie angeordnet sind,
so dass die Brückenelemente (9) nebeneinander in Richtung des Endabschnitts (5a) der radial inneren Wand angeordnet sind, der demjenigen gegenüberliegt, an dem die radial innere Wand (5) auf die radial äußere Wand (3) trifft.

2. Verfahren nach Anspruch 1,
wobei die additive Fertigung auf einem Metallpulverbett erfolgt.

3. Verfahren nach Anspruch 1 oder 2,
wobei die radial äußere Wand (3) und die radial innere Wand (5) über einen Teil der Länge der radial inneren Wand, der sich zwischen den Endabschnitten erstreckt, parallel zueinander verlaufen.

4. Verfahren nach einem der vorhergehenden Ansprüche,
wobei in der radial äußeren Wand (3) Öffnungen (13) freigelassen werden, die zwischen der radial äußeren Wand (3) und der radial inneren Wand (5) münden.

5. Brennkammer für ein gasbetriebenes Turbotriebwerk mit einer Achse (X1), entlang derer sie eine stromaufwärtige Seite und eine stromabwärtige Seite aufweist, wobei die Brennkammer umfasst:
- um die Achse (X1) herum eine radial äußere Wand (3), die bereichsweise mit einer radial inneren Wand (5) verkleidet ist, so dass zwischen diesen ein Zwischenraum (7) besteht, in dem sich eine Luftschicht bilden kann,
- vereinzelte Brückenelemente (9), die nebeneinander verlaufen und die radial innere Wand und die radial äußere Wand einstückig miteinander verbinden,
**dadurch gekennzeichnet, dass**
- die radial innere Wand (5) somit zu einem freien Endabschnitt (5a) zusammenhängend ausgebildet ist,
- die beiden Wände, nämlich die radial äußere (3) und die radial innere (5), auf der stromaufwärtigen Seite zu einem dem freien Endabschnitt (5a) gegenüberliegenden Endabschnitt hin miteinander verbunden sind und daher nicht orthogonal, sondern vielmehr schräg zur Achse (X1) verlaufen, indem sie sich der Achse (X1) stromaufwärts annähern, wobei die radial äußere Wand zu dem stromaufwärts gelegenen Verbindungsendabschnitt hin eine stärkere Neigung aufweist,
- um die Achse (X1) herum die radial äußere Wand (3) und die radial innere Wand (5) polygonale Flächen haben und die Brückenelemente zwischen der radial äußeren Wand und der radial inneren Wand schräg und nicht orthogonal zu derjenigen Seite des Polygons verlaufen, an der sie angeordnet sind,
- die Brückenelemente (9) orthogonal zu der Richtung, in der sie die radial innere Wand und die radial äußere Wand verbinden, und zu der Richtung, in der sich die radial innere Wand (5) und die radial äußere Wand (3) um die Achse (X1) herum erstrecken, langestreckt verlaufen und Endabschnitte aufweisen, die jeweils zweifach abgeschrägt ausgebildet sind.

6. Brennkammer nach Anspruch 5,
wobei sich die Brückenelemente (9) an einem Endabschnitt, an dem sie mit der radial inneren Wand (5) verbunden sind, aufweiten, bis sie sich paarweise berühren und/oder einen Winkel von weniger als 150° oder zwischen 120° und 160° einschließen.

7. Brennkammer (1) nach Anspruch 5 oder 6,
wobei sie in der radial äußeren Wand (3) Öffnungen (13) aufweist, die zwischen der radial äußeren Wand und der radial inneren Wand münden.

8. Brennkammer nach einem der Ansprüche 5 bis 7,
wobei die Öffnungen an mehreren Flächen der radial äußeren Wand (3) entlang mehrerer parallel verlaufender Linien ausgebildet sind und/oder einzeln in Form eines konvexen Fünfecks vorliegen.

9. Luftfahrtturbotriebwerk mit der Brennkammer (1) nach einem der Ansprüche 5 bis 8.

## Claims

1. Method of production by additive manufacturing of at least one part of a combustion chamber of an aeronautic turbomachine extending around an axis (X1) and comprising a radially outer wall (3) which is lined locally by a radially inner wall (5) so as to form an intermediate space (7) between them which can create a film of air, **characterised in that**, from bottom to top and by additive manufacturing:
- while a lower portion (30) of said radially outer wall (3) is created by depositing a succession of layers of material, the deposition of layers of said material is continued in order to erect, on said lower portion, bridges (9) which are raised next to one another up to the tops (9a) of said bridges, where
- the deposition of layers of said material is continued in order to create, annularly around the axis (X1), the radially inner wall (5), while continuing with said creation of the radially outer wall (3), and
- said deposition of layers of material is further continued, at least until said lower portion (30) of the radially outer wall (3) joins an end (5b) of the radially inner wall that is opposite the end where the bridges (9) are located,
doing so:
- while creating, polygonally around the axis (X1), said radially outer wall (3) and radially inner wall (5), and
- while creating the bridges such that they extend in an inclined manner between said radially outer wall and radially inner wall, not perpendicular to the side of the polygon where they are arranged,
such that the bridges (9) are arranged next to one another towards the end (5b) of the radially inner wall that is opposite the end where the radially inner wall (5) joins the radially outer wall (3).

2. Method according to claim 1, wherein said additive manufacturing is carried out on a metal powder bed.

3. Method according to claim 1 or 2, wherein the radially outer wall (3) and the radially inner wall (5) are parallel to one another over part of the length of the radially inner wall extending between said ends.

4. Method according to any of the preceding claims, wherein openings (13) are reserved in the radially outer wall (3), which lead to between the radially outer wall (3) and the radially inner wall (5).

5. A combustion chamber of a gas turbomachine having an axis (X1) along which it has an upstream side and a downstream side, the combustion chamber comprising:
- about said axis (X1), a radially outer wall (3) lined locally by a radially inner wall (5) so as to form an intermediate space (7) between them which can create a film of air,
- customised bridges (9), which extend next to one another and which connect the radially inner wall and the radially outer wall as one piece,
**characterized in that**:
- the radially inner wall (5) is thus connected to a free end (5a),
- the two walls, respectively radially outer (3) and radially inner (5) walls, are connected to one another, upstream, towards an end opposite to said free end (5a), and therefore not perpendicular but inclined relative to the axis (X1) by drawing closer to the axis (X1) in the upstream direction, with a steeper slope of the radially outer wall towards said upstream connecting end,
- around the axis (X1), said radially outer wall (3) and radially inner wall (5) have polygonal faces, and between said radially outer wall and radially inner wall, the bridges extend in an inclined manner, not perpendicular to the side of the polygon where they are arranged,
- perpendicularly to the direction in which they connect the radially inner wall and the radially outer wall and to the direction in which said radially inner wall (5) and radially outer wall (3) extend around said axis (X1), the bridges (9) being elongate and having ends which are each double-bevelled.

6. Combustion chamber according to claim 5, wherein, at an end where they are joined to the radially inner wall (5), the bridges (9) flare out until they come into contact in pairs and/or to an angle of less than 150° or between 120° and 160°.

7. Combustion chamber (1) according to claim 5 or 6 having openings (13) in the radially outer wall (3) which lead to between the radially outer wall and the radially inner wall.

8. Combustion chamber according to one of claims 5 to 7, wherein the openings are formed on a plurality of faces of the radially outer wall (3), along to a plurality of parallel lines, and/or individually having a convex pentagonal shape.

9. Aeronautic turbomachine comprising the combustion chamber (1) according to any of claims 5 to 8.
